# EUROPEAN PATENT APPLICATION

(11) **EP 4 840 376 A1**
(43) Date of publication of application: **18.11.2026**
(21) Application number: 26178803.8
(22) Date of filing: 14.05.2026
(51) Int. Cl.: A47J 37/08

(54) **AUTO-COMPRESSION TOASTER**

(30) Priority: 14.05.2025 US 202563805709 P; 11.05.2026 US 202619673736
(71) Applicant: Marmon Foodservice Technologies, Inc., Osseo, MN 55369 (US)
(72) Inventor: Greenberg, Caleb, Osseo, 55369 (US); Bauer, Rich, Osseo, 55369 (US); Frio, Marcus, Osseo, 55369 (US); Banasik, Greg, Osseo, 55369 (US)
(74) Representative: Slingsby Partners LLP

(57) **Abstract**

A conveyor assembly for a toaster includes an alignment gear and a drive gear. A conveyor belt extends between the alignment gear and the drive gear in an endless loop. A bracket is configured to support the alignment gear and the drive gear. At least one force element is connected to the bracket and positioned internal to the conveyor belt and between the alignment gear and the drive gear, the at least one force element comprising a surface and a bias, the surface configured to engage the conveyor belt and the bias connected between the surface and the bracket to place a resilient force on the conveyor belt through the surface in a direction away from the bracket.

## Description

### CROSS-REFERENCE TO RELATED APPLICATIONS

The present application claims priority of US Provisional Patent Application No. 63/805,709 filed on May 14, 2025.

### FIELD OF THE DISCLOSURE

The present disclosure is related to toasters. More specifically, the present disclosure is related to toasters which are adjustable to accommodate variance in food products.

### BACKGROUND

A conveyor toaster is a well-known cooking device that uses a vertical or near-vertical heating platen and a slowly rotating conveyor, which urges a food product against the platen while it simultaneously drags a food product downwardly and across the platen's hot surface. By virtue of its design, a conveyor toaster is able to process food products continuously as opposed to the toasters commonly used by consumers, which process food products in a batch mode.

Conveyor toasters are ill-suited for consumer use because of their size, manufacturing cost, power requirements, and the time required to pre-heat the platen to operating temperature. Conveyor toasters are preferred by restaurants and food preparation services, however, that require high-volume through-put and consistent heating/toasting of the food products.

A well-known problem with prior art conveyor toasters comes from the heavy-gauge wire conveyors that urge a food product against the platen and which moves the food product across the platen. These wire conveyors tend to leave marks in soft food products like breads and bagels. Another problem with prior art conveyer toasters is the inability to process food products of varying thicknesses due to the fact that the spacing or separation distance between the actual conveyor and the heated platen is fixed. Food products that are too thin will thus fall through a prior art conveyor toaster. Food products that are too thick can jam the conveyor in place. Even within the same type of toastable food product, there can be significant variance in the thickness of individual pieces.

Solutions for adjustable conveyor toasters have been proposed, for example as found in "Toaster With Removable and Adjustable Conveyors", U.S. Patent Application Publication No. 2010/0275789. U.S. Patent Application Publication No. 2012/0121782, entitled "Conveyor Toaster With Self-Aligning Belts,", uses a rib attached to the inside surface of a continuously rotating belt to assist belt alignment and also provides a manual belt-tensioning lever.

US Patent No. 10,660,466, entitled "Toaster with Adjustable Conveyor" and US Patent No. 12,004,689, entitled "Toaster with Input Control" disclose toasters with adjustable compression, conveyor tension, conveyor speed, platen temperature, and/or platen and conveyor position or angle.

### BRIEF DISCLOSURE

An exemplary embodiment of a conveyor toaster includes a conveyor assembly. The conveyor assembly includes a bracket. A first gear is rotatably connected to the bracket. A second gear is rotatably connected to the bracket. A conveyor belt is in engagement with the first gear and the second gear. A drive motor is operably connected to the first gear. The drive motor operates the drive gear to move the conveyor belt about the first and second gears. A platen is configured to be heated and is positioned relative to the conveyor belt. A mounting bracket is connected to the bracket of the conveyor assembly. Movement of the mounting bracket changes the position of the conveyor assembly relative to the platen.

In a further exemplary embodiment, the conveyor toaster includes a tension spring connected between the bracket and the second gear. The tension spring applies a tensioning force on the second gear in a direction away from the first gear to place a variable tension on the conveyor belt. In another exemplary embodiment, the toaster includes an adjustment assembly connected to the mounting bracket. The adjustment assembly includes a carriage connected to the mounting bracket. A rack with a plurality of teeth is connected to the carriage. A pinion with a plurality of teeth is enmeshed with the plurality of teeth of the rack and rotation of the pinion translates the conveyor assembly relative to the platen.

An example of a conveyor assembly for a toaster includes an alignment gear and a drive gear. A conveyor belt extends between the alignment gear and the drive gear in an endless loop. A bracket is configured to support the alignment gear and the drive gear. At least one force element is connected to the bracket and positioned internal to the conveyor belt and between the alignment gear and the drive gear, the at least one force element comprising a surface and a bias, the surface configured to engage the conveyor belt and the bias connected between the surface and the bracket to place a resilient force on the conveyor belt through the surface in a direction away from the bracket.

Examples of the conveyor assembly may further include that the at least one force element is a plurality of force elements and each force element of the plurality includes a surface and a bias. Each force element may be independently movable between the conveyor belt and the bracket. Each force element may include a bias at either end of the force element, and each bias operates independently on a respective end of the force element. The surface of each of the plurality of force elements may be provided by a roller. The surface of each of the plurality of force elements may be provided by a plurality of rollers. The surface of each of the plurality of force elements may be provided by a plate.

In still further examples of the conveyor assembly, at least one force element includes a mounting bracket at each end of the at least one force element, the mounting bracket at each end of the at least one force element may be independently connected to the bracket. A spring may be positioned between the mounting bracket and the bracket. The bracket may include a plurality of inwardly extending flanges, and each force element may be secured to the bracket at opposed flanges of the plurality of flanges. The surface of the force element may be connected to a mounting bracket and the bias may include a spring that extends between the mounting bracket and a flange of the plurality of flanges of the bracket. The bracket may include a pair of spaced apart sidewalls. The drive gear and the alignment gear may be rotatably connected between the sidewalls, the sidewalls each comprising opposed flanges extending interior of the sidewalls of the bracket. The at least one force element may be connected to the bracket at the opposed flanges. The bracket may further include a plurality of slats that extend between the sidewalls to connect the sidewalls, the plurality of slats may be spaced apart from the opposed flanges along a vertical dimension. Each sidewall of the bracket may define a spring mount and a tensioning spring depends from the spring mount to operative connection with the alignment gear, whereby the tensioning spring places tension on the conveyor belt through the alignment gear.

An example of a conveyor toaster includes a conveyor assembly and a platen arranged lengthwise along a run span of the belt between the alignment gear and the drive gear, and defining a toaster gap between the platen and the conveyor belt. The platen may be movable relative to the conveyor assembly. The conveyor assembly may be movable relative to the platen. The bracket may be movable relative to the platen. The bracket may include at least one bracket mount secured to a carriage that is mechanically movable to adjust a position of the bracket relative to the platen. At least one actuator may be connected to the platen and/or to the conveyor assembly. The at least one actuator may be configured to adjust a relative position between the platen and the conveyor assembly.

### BRIEF DESCRIPTION OF THE DRAWINGS

FIG. 1 depicts an example of a conveyor toaster.
FIG. 2 is a cross-sectional view of the conveyor toaster taken along line 2-2 of FIG. 1.
FIG. 3 is a cross-sectional view of the conveyor toaster taken along line 3-3 of FIG. 1.
FIG. 4 is a side view of the conveyor toaster with the control side panel removed.
FIG. 5 is a perspective sectional view taken along 5-5 of FIG. 1.
FIG. 6 is an isolated view of a conveyor assembly.
FIG. 7 is a detailed view of an end of a tensioning roller.
FIG. 8 is an isolated view of the conveyor bracket.
FIG. 9 is a detailed view of a mounting bracket.
FIG. 10 is a schematic diagram of the conveyor assembly.
FIGS. 11-15 are schematic diagrams of additional examples of conveyor assemblies.

### DETAILED DISCLOSURE

As provided herein exemplary embodiments of devices and methods for heating food products are constructed with a plurality of independent and adjustable systems whereby a single apparatus can be selectively operated to toast a wide variety of food products including, but not limited to buns, rolls, croissants, bagels, muffins, flatbread, pitas, cakes, pastries, and so forth. In still further exemplary embodiments prepared food products such as sandwiches, burritos, or the like may also be toasted according to the apparatus and method as disclosed herein.

The terms "heat" and "heating" mean, to "make warm or hot". The term "heating food products" means to make food products warm or hot. The terms, heat, heating, and heating food products include heating a food product to a temperature at which the food product is toasted. As used herein, toast, toasted, and toasting all refer to heating a food product to make it crisp, hot, and/or brown by heat or heating.

It is well known that toasted bread products have a distinctly different flavor than do the same products prior to toasting. Toasting also changes a bread product's color and its texture. Toasting and toasted bread products also give off a pleasing aroma. Toasting and its effects are the result of a Maillard reaction.

A conveyor toaster typically arranges at least one conveyor relative to at least one heated platen and the conveyor is configured to drag a food product over the side of the heated platen. The surface of the food product in contact with the side of the platen is thus heated.

Consistent continuous toasting of multiple food products requires close coordination between the conveyor speed, conveyor tension, and a minimum distance between the conveyor and the platen. Thus, the tendency in conveyor toasting systems is to integrate all of these systems together which provides tolerance control but limits system flexibility or adjustability. Even in systems that have adjustable components, such systems are still not able to accommodate a wide variety of food products. Thus, conveyor toasters tend to be constructed to a specification to toast a particular food product or narrow range of similar food products

One significant consideration in current conveyor toaster products is control of the gap between the conveyor belt and the platen. Some current conveyor toasters use a cam to force the conveyor towards the platen to define a minimum conveyor-platen distance. Other systems may move the entire conveyor assembly relative to the platen to define the gap. While this distance serves to force the food product into contact with the platen and to engage the food product with the conveyor to drag the food product along the platen, this minimum distance, if too large will result in the food product falling through the toaster without the necessary engagement with the platen while if the minimum distance is too small, the food product will be crushed. While some food products are resilient and return to shape, other food products are more delicate and may be damaged by such crushing. In addition, within the range of compression where food product is moved along the platen, variation in compression results in variation in the level of toasting. The position of the cam also can be used to define the tension on the belt. As the belt is forced towards the platen, more tension is placed on the belt. Therefore, belt tension and conveyor-platen distance can be related. This adjustment position is often selected to balance between crushing the bread product, and encouraging sufficient engagement between the bread and the platen to achieve the desired toasting effect, and in an effort to ensure achievement of toasting level errs towards over toasting.

The devices and methods as disclosed herein address the above-noted problems as well as others by providing a conveyor toaster in which a force element is positioned internal to the conveyor belt such that the compression and tension of the conveyor belt in contact with the bread product is automatically adjusted based upon contact with the force element, as opposed to contact with an entire plate, which does not provide flexibility from one piece of bread to the next. The force element provides a surface that contacts an interior side of the conveyor belt, this surface may exemplarily be one or more rollers or one or more plates or similar fixed surfaces which are independently suspended and configured to apply a force through the conveyor belt onto the bread product in contact with the conveyor belt.

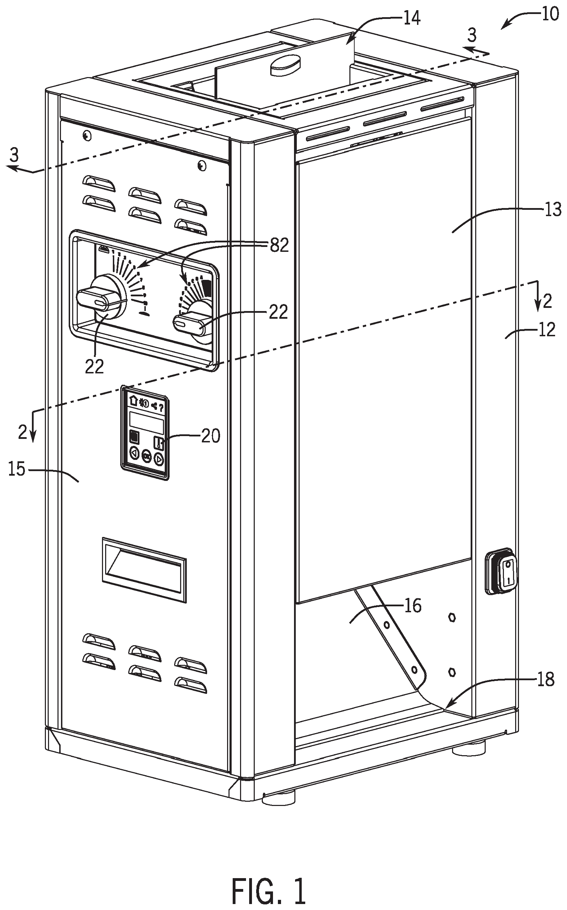

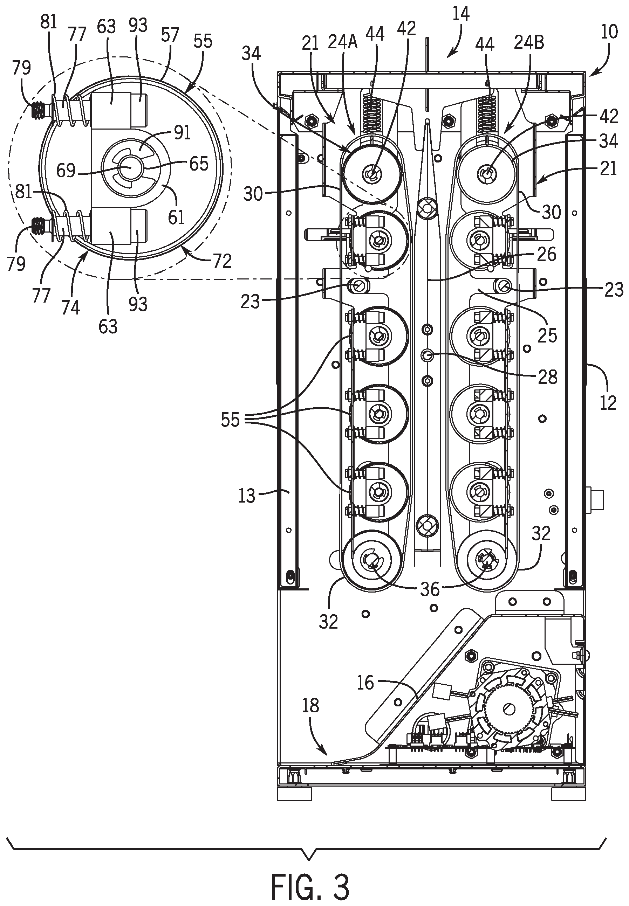

FIG. 1 depicts an exemplary embodiment of a toaster 10. The toaster 10 is defined by a cabinet 12 and includes a feed opening 14 at the top. The cabinet 12 is constructed with a front panel 13 and a control side panel 15. As shown in FIG. 3, the cabinet 12 also includes a rear panel 17 and an off side panel 19. The feed opening 14 is configured to receive pieces of food product to be toasted. In exemplary configurations, the feed opening 14 may be a single opening for use with a single toasting path while in other embodiments the feed opening 14 may be bifurcated such as to provide two toasting operations, for example, the toasting of the heel and the crown of the bun and/or two slices of bread simultaneously.

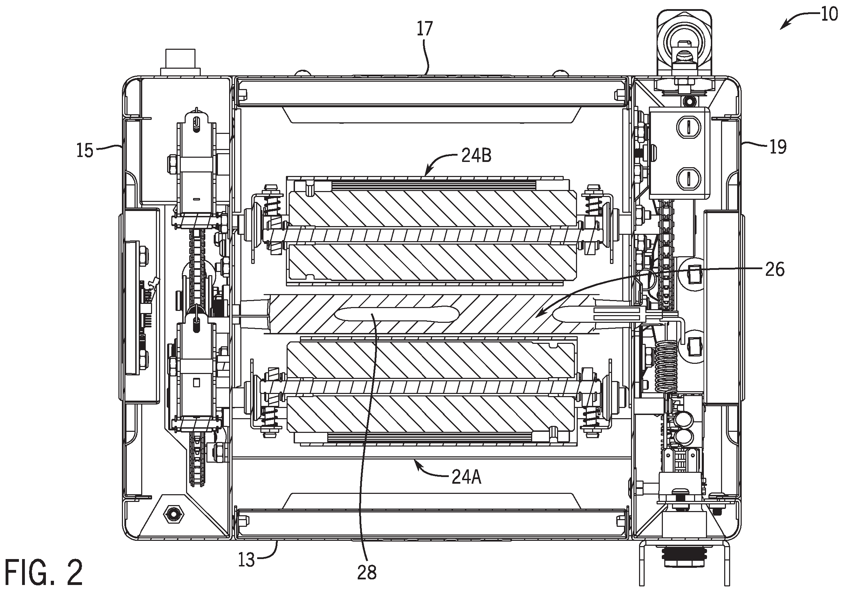

FIG. 2 is a sectional view of the toaster 10 taken along line 2-2 of FIG. 1. In this view, two conveyor assemblies 24a and 24b of the present disclosure are depicted relative to a platen 26. The platen 26 includes heating coils 28 which may exemplarily be electric heating elements and which are controlled to heat the platen 26 to a set or predetermined temperature. The conveyor assemblies 24a, 24b, as will be further described herein, are configured to provide both modular coarse adjustments and automatic fine adjustments of the relative distance between the conveyor belt 30 and the heated platen 26 to compensate for varying types of food products and to accommodate for inconsistencies amongst bread products being fed into the toaster 10.

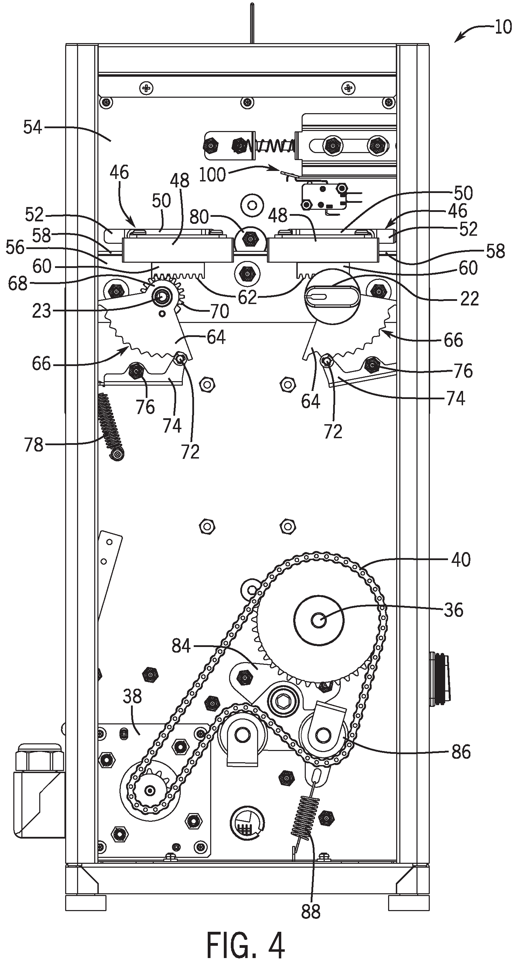

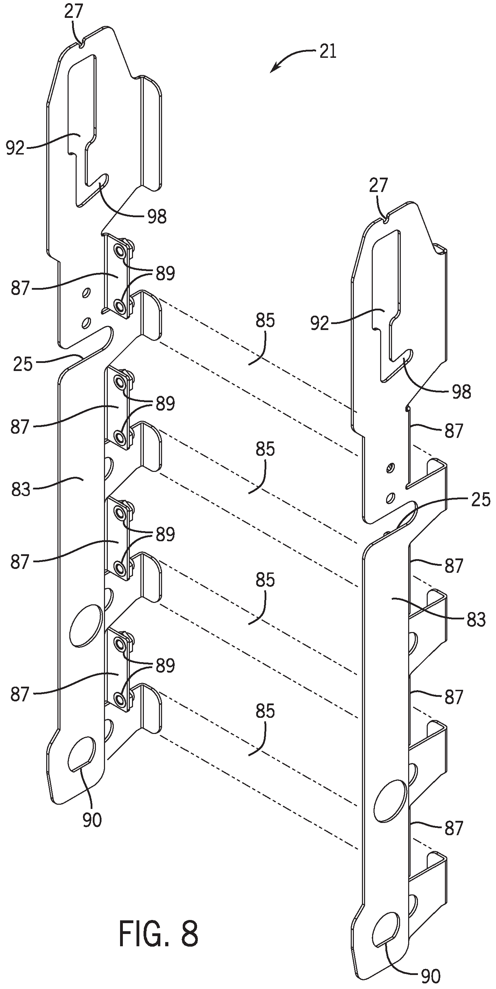

FIG. 3 is a sectional view of the toaster 10 taken along line 3-3 of FIG. 1. The aforementioned conveyor assemblies 24a, 24b each include a bracket 21 from which the rest of the conveyor assembly 24a, 24b is suspended. The bracket 21 is exemplarily shown in isolation in FIG. 8. The bracket 21 is movable relative to the platen 26 in order to execute the aforementioned coarse adjustment of the relative distance between the conveyor belt 30 and the platen 26 as described herein. Adjustment shafts 23 which are connected to the dials 22, depicted in FIG. 1, extend through the toaster 10 and within slots 25 in the bracket 21. In this manner the bracket 21 is movable relative to both the shaft 23 and the platen 26 to adjust the spacing between the conveyor belt 30 and the platen. FIG. 4 is a side view of an exemplary embodiment of the toaster 10 with the control side panel 15 removed for clarity to depict an example of coarse adjustment assemblies 46. The coarse adjustment assemblies 46 each include a dial 22 secured to a shaft 23. In FIG. 4, one dial 22 is removed to provide better visualization of the components behind the dial 22, including the end of the shaft 23 and the rack 60 and pinion 68 as will be described in further detail herein.

Conveyor belts 30 may take various forms as known in the field of toasters, including, but not limited to wire belts, wire and silicon belts, wire and metal plate belts, and solid metal plate belts. The aforementioned examples of conveyor belts are exemplary listed in order from most flexible to least flexible. Conveyor belt flexibility, as will be described with respect to embodiments herein can have an impact regarding how the belt is tensioned and the ability of the belt to deform relative to a food product being toasted.

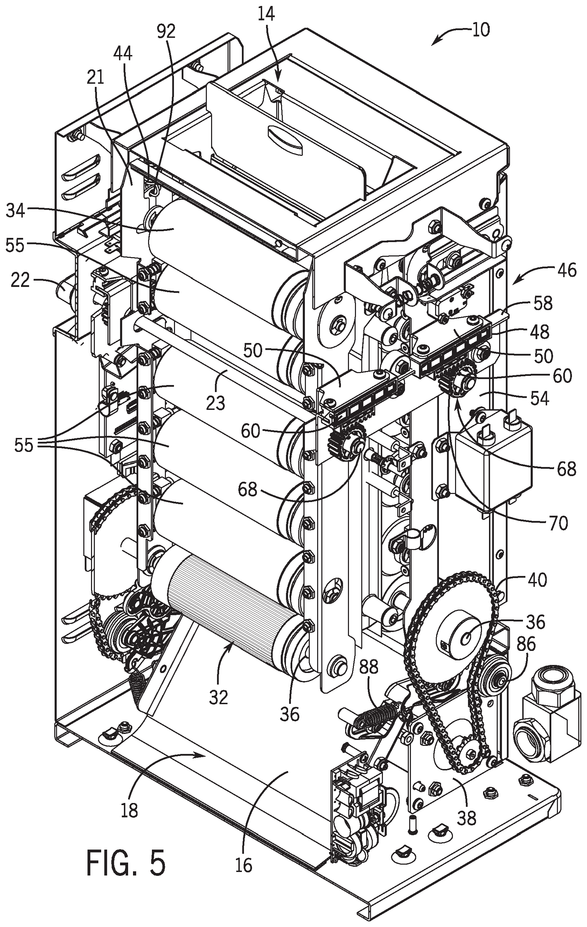

The conveyor belts 30 respectively move around drive gears 32 and alignment gears 34. The drive gears 32 are rotatably connected to the bracket 21 and the alignment gears 34 are movably connected to the bracket 21 as described in further detail herein. The drive gears 32 are respectively secured to drive shafts 36. As exemplarily depicted in FIGS. 4 and 5, each drive shaft 36 is driven by a respective drive motor 38. In a non-limiting embodiment, a drive chain 40 may motively connect the drive motor 38 to the drive shaft 36. In an exemplary embodiment, the drive motors 38 may be electrical stepper motors. In examples, a separate drive motor 38 is provided for each conveyor assembly 24 while in other examples, a single drive motor may be connected to both conveyor assemblies.

The rotation of the drive gears 32 causes the conveyor belt 30 to move and the conveyor belt 30 at an opposite end rotates about the alignment gear 34 which rotates about a alignment shaft 42. Tensioning springs 44 are connected between respective spring mounts 27 on the brackets 21 and the ends of the alignment shafts 42 and/or the alignment gears 34. It will be recognized a tensioning spring 44 may be connected to a connector, for example a plate, that is in turn connected to the alignment shaft 42 and/or the alignment gear 34. The tensioning springs 44 provide a bias force in a direction away from the drive gear 32 and place tension on the conveyor belt 30 as it rotates about the alignment gear 34 and drive gear 32. It will be recognized in the present embodiment and in further embodiments disclosed herein that a compression force against a piece of food being toasted by the toaster 10 may exemplarily be defined by a conveyor belt placed in tension by the tensioning springs and a conveyor belt-platen gap.

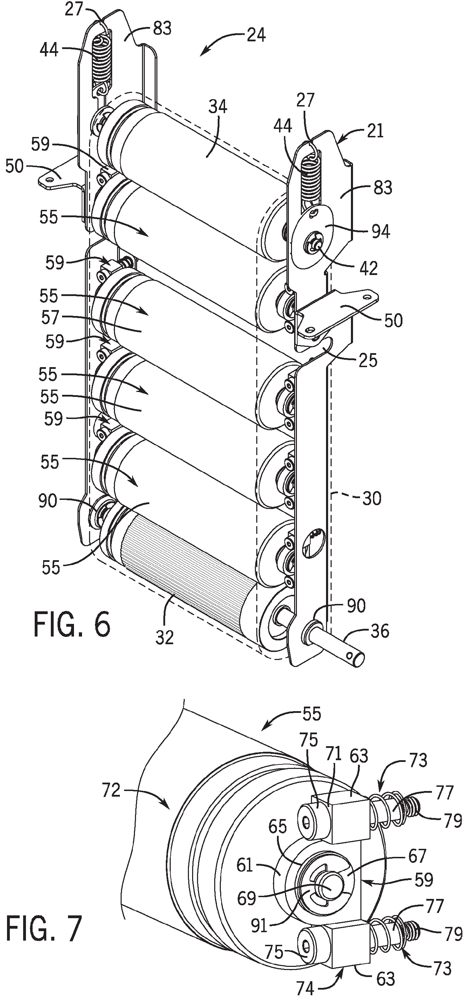

The conveyor assemblies 24a, 24b each further include multiple force elements 55. The force elements 55 include a surface 72 that contacts the conveyor belt 30 and a bias 74 connected to the bracket 21 that positions the surface 72 in a direction away from the bracket 21. In the example shown in FIGS. 5 and 6, the surface 72 is provided by one or more rollers 57, and the bias 74 exemplarily includes one or more springs 77. The force elements 55 automatically provide the aforementioned fine adjustment of the relative distance between the conveyor belt 30 and the platen 26 by extending the surface 72 away from the bracket 21. The force elements 55 are coupled to the bracket 21 and aligned vertically between the drive gears 32 and the alignment gears 34. The force elements 55 are positioned in contact with the conveyor belt 30 such that the force elements 55 hold the conveyor belt 30 in tension around the bracket 21.

The coarse adjustment assembly 46 includes a carriage 48. The carriage 48 includes a bracket mount 50 which is secured through a slot 52 in a toaster wall 54 to the bracket 21. A support plate 56 is fixed in position relative to the toaster wall 54 and the respective shafts 23 extend through the support plate 56 and are rotatable within the support plate 56. The support plate 56 includes a guide rail 58 upon which the carriages 48 are slidably mounted. In the embodiment depicted, the guide rail 58 is horizontal (and exemplarily perpendicular to the platen). Therefore, movement of the carriage 48 exemplarily moves the bracket 21 (and the conveyor belt 30) towards and away from the platen 26. The carriage 48 further includes a rack 60 arranged with a plurality of rack teeth 62.

The shaft 23 is secured to a scallop plate 64. The scallop plate 64 includes a plurality of detents 66. The scallop plate 64 also includes a pinion 68 that includes a plurality of pinion teeth 70. The pinion teeth 70 mesh with the rack teeth 62, such that rotation of the dial 22 rotates the shaft 23 and also translates the carriage 48 along the guide rail 58, in turn moving the bracket 21 and the rest of the conveyor assembly 24. In this manner, the relative position between the conveyor belt 30 and the platen 26 can be adjusted to adjust the toasting gap.

To accommodate movement of the conveyor assembly 24, the drive shaft 36 is also movable within the toaster 10. A translation plate 84 is movably connected to the drive shaft 35 in a manner such that the translation plate 84 pivots with translation of the drive shaft 36. A take-up wheel 86 is movably connected to the translation plate 84 and engages the drive chain 40. A tensioning spring 88 is connected to the take-up wheel 86 and biases the take-up wheel 86 to a position that keeps tension on the drive chain 40 at any position of the drive shaft 36.

FIG. 5 is a sectional perspective view of a toaster 10 as taken along line 5-5 of FIG. 1, and with the control side panel 15 and the off side panel 19 removed to reveal additional detail. Furthermore, the conveyor belt 30 is removed to better show the bracket 21 of the conveyor assembly 24. FIG. 5 further shows the off side of the toaster 10, exemplarily behind the off side panel 19 (removed in FIG. 5). The coarse adjustment assemblies 46 correspond to those on the control side of the toaster 10 (as better shown in FIG. 4) and include similar components. As is better shown in FIG. 5, the bracket mounts 50 extend through the slots 52 in the toaster walls 54 and are secured to the respective brackets 21 of the conveyor assemblies 24. Similar coarse adjustment assemblies 46 at either side of the toaster 10 help to keep the bracket 21 square to the platen 26 as the toaster gap is adjusted.

FIG. 8 depicts the bracket 21 in isolation. The bracket 21 has a pair of opposed sidewalls 83 which extend vertically and which are connected via horizontal slats 85 extending therebetween. A series of flanges 87 extend from the sidewalls 83 in a direction towards the interior of the bracket 21 between the sidewalls 83. The slats 85 are spaced apart vertically to create a space between each of the slats 85 to accommodate the rollers 57 of the force elements 55. The flanges 87 are also vertically spaced and positioned vertically between the slats 85. The force elements 55 secured between the sidewalls 83 at the flanges 87. Referring to FIGS. 6 and 8, various components of the conveyor assembly 24 are connected to the bracket 21. The drive shafts 36 and the drive gears 32 are movably connected to the bracket 21 through drive holes 90, which are positioned on each of the opposed sidewalls 83. The tension spring 44 hangs from a spring mount 27 on each of the opposed sidewalls 83 opposite the drive holes 90 and extends through a spring aperture 92 before connecting to a spring plate 94 connected to the alignment gear 34 and/or the alignment shaft 42. The alignment shaft 42 connects the alignment gears 34 to coordinate combined rotation of both of the alignment gears 34. The alignment gear 34, shaft 42, and/or spring plate 94 extend through an adjustment aperture 98. The adjustment aperture is dimensioned such as to accommodate a variety of vertical positions of the alignment gears 34 and shaft 42. In exemplary and non-limiting embodiments, the adjustment aperture 98 may be a rectangle, ellipse, or an oval. In still further non-limiting exemplary embodiments, the adjustment aperture 98 may have a major axis dimension and a minor axis dimension. In this manner, the spring 44 may extend or retract based upon the tension in the conveyor belt of the conveyor assembly 24. In further exemplary embodiments, the spring mount 27 may be movable or adjustable such that the tension in the conveyor belt can be adjusted. In still further embodiments, the specific position of the alignment gear 34 and alignment shaft 42 may be adjustable, for example within the adjustment aperture 98 to select a conveyor belt tension.

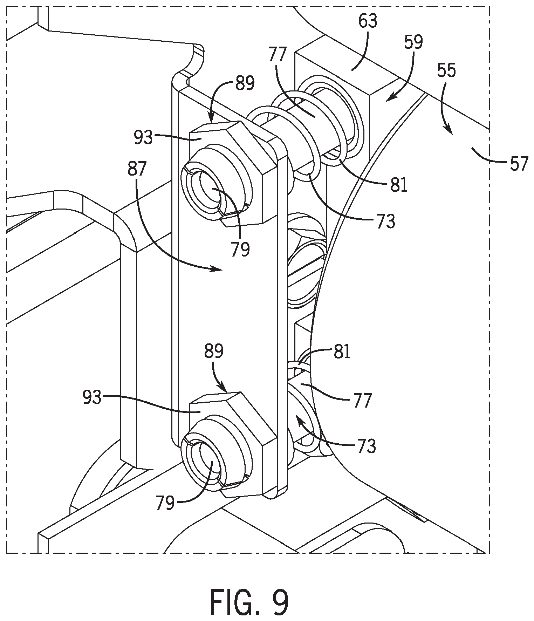

FIG. 6, depicts the conveyor assembly 24. The conveyor assembly 24 includes the bracket 21 and the force elements 55. The conveyor belt 30 is shown in phantom. The force elements 55 exemplarily extend in a direction transverse to a direction of movement of the conveyor, and thus extend across the conveyor belt 30 in this dimension. FIG. 7 is a detailed view of an end of a force element 55. Each of the depicted force elements 55 includes the cylindrical drum providing the roller 57 which spans the distance in the transverse dimension between either side of the bracket 21. It will be recognized that the roller 57 may be provided by a solid or other construction as well. A central shaft 69 extends through the roller 57 between mounting brackets 59. The mounting brackets 59 are connected to the bracket 21 at the flanges 87. The central shaft 69 extends through a through-bore 65 in the mounting bracket 59. The central shaft 69 has a groove positioned at each end that protrudes exterior of the respective through-bores 65 of the mounting bracket 59, and exemplarily a washer 67 about the central shaft 69. The groove is configured for engagement with an e-clip 91 to provide secure rotatable attachment of the mounting bracket 59 to the central shaft 69. As is further also shown in FIG. 9, the mounting bracket 59 has a central lug 61 and a pair of mounting blocks 63 on either side of the central lug 61. Screws 73 extend through through-bores 71 in each of the mounting blocks 63. The screws 73 exemplarily each have a head 75, an unthreaded shoulder portion 77, and a threaded end 79 opposite the head 75. The head 75 engages the mounting block 63 and the shoulder portion 77 extends through the through-bore 71. The threaded end 79 secures the screw 73 to the bracket 21 at the flange 87. A compression springs 81 are wound around screws 73 and place an extensive force between the mounting blocks 63 and the flange 87. The spring 81 resists compression when the mounting bracket 59 is moved relative to the mounting flange 87. The spring 81 places a bias force on the mounting bracket 59, and hence the roller 57, away from the bracket 21, to a fully extended position as defined by the engagement of the head 75 of the screw73 with the mounting block 63.

The mounting flange 87 has a pair of vertically stacked through-bores 89 which align with the screws 73 through the mounting blocks 63 of the mounting bracket 59. The threaded end 79 of the shoulder screws 73 extend through the through-bores 89. A hex nut 93 may be secured onto the threaded end 79 to fixedly secure the mounting bracket 59 to the mounting flange 87. The hex nut 93 may alternatively be a PEM nut or another type of captive nut, although this example is not limiting. The through-bores 89 of the flange may also be threaded to securely receive the threaded end 79 of the screw 73.

Because each of the force elements 55 are independently mounted to the bracket 21, the surface 72 of the force elements 55 also each exert a force on the conveyor belt 30 locally at a point of contact between the surface 72 and the conveyor belt 30, for each force element 55. Food products moved through the toaster 10 by way of the compressive force of the belt 30 on the food product can be independently compressed according to varying sizes and shapes. As different food products are moved through the toaster 10 via the conveyor belt 30, the force elements 55 can automatically provide fine adjustments of the tension on the belt 30 from one piece of bread to the next or even along an individual piece of bread which has varying degrees of depth along the length of the bread by moving outwardly relative to the platen 26 and toward the respective mounting flange 87 against the bias of the respective compression springs 81.

Additionally, since the mounting brackets 59 are connected to opposing ends of the central shaft 69 of a roller of a force element 55 are independent of one another, the mounting brackets can offer a degree of variability in an angle of the roller 57 in a plane generally normal to a plane of the conveyor belt at the force element 55. That is, the bias 74 as exemplarily provided by the mounting brackets 59, springs 81, screws 73, and flange 87 at either end of the roller 57 may result two different positions along the screws 73 from the flange 87 at either end of the roller 57. This may cause the roller 57 to pivot within that plane generally normal to the conveyor belt, such that the axis of rotation is not parallel relative to the drive axis 36, but rather, angled such that opposite ends of the tensioning roller 55 have different depths relative to the platen 26. As such, food products of varying sizes which are positioned adjacent to one another along the same tensioning roller 55 may be compressed according to their relative sizes.

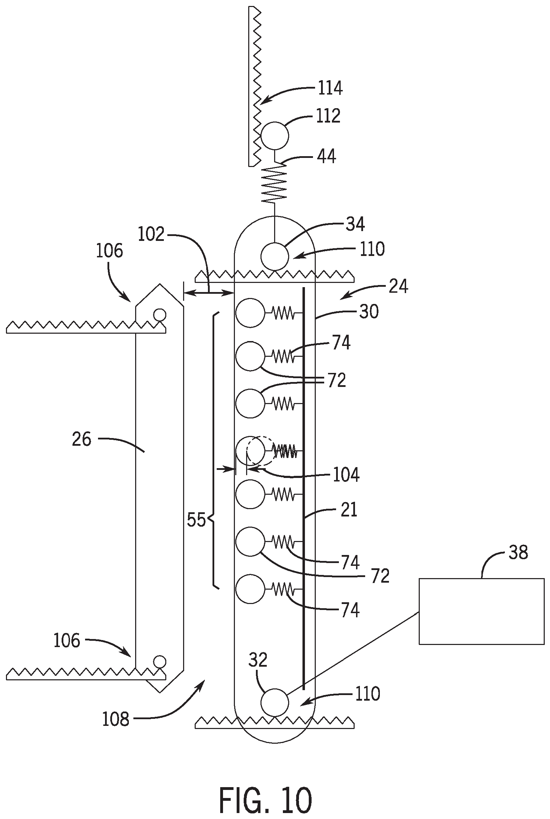

FIG. 10 is a schematic depiction of an example of a toasting system 100 internal to a toaster 10 in accordance with the present disclosure. In this example, both the conveyor assembly 24 and the platen 26 components are adjustable, for example to provide both coarse adjustment represented by arrow 102 and fine adjustment represented by arrow 104 to the relationship between the platen 26 and the conveyor belt 30. In examples, rack and pinion systems may be used for moving the relative positions of components. It will be recognized that in alternative embodiments a variety of other known actuators may be used, including, but not limited to linear actuators, worm drives, or others. The actuators may be manually operated or electrically operated, exemplarily using electrical stepper or servo motors, or other drive mechanisms may be used. In embodiments, such electro-mechanical adjustments of the toaster would be carried out through inputs to a controller and outputs from a processor positioned within the toaster 10. While the embodiment described above with respect to FIGS. 1-9 provide for an adjustable spacing between the platen 26 and the conveyor assembly 24, additional embodiments and adjustable features are disclosed herein and a person of ordinary skill in the art would recognize that the features disclosed herein may be combined with other features disclosed herein to form still further embodiments within the scope of the present disclosure.

In an example, top and bottom ends of the platen 26 are each connected to actuators 106, exemplarily but not limited to rack and pinion systems and as such are independently moveable. In an embodiment this may be used to adjust a toaster gap 108 between the platen 26 and the conveyor assembly 24. Similarly, the drive gear 32 and/or the alignment gear 34 may be translatable on actuators 110 to also adjust the toaster gap 108. The actuators 110 may be, but are not limited to rack and pinion systems or other actuators as described above. Together one or more of these actuators 108, 110 may be operable to provide the coarse adjustment 102 of the toaster gap 108.

It will be recognized that the uncompressed thickness of the food product must be greater than the toaster gap 108 for the food product to be held vertically within the toaster between the conveyor 30 and the platen 26. However, because the ends of the platen 26 and/or conveyor assembly 24 may be independently moveable, the toaster gap 108 need not be uniform and may include a wider gap at the top for receiving the food product while maintaining a minimum gap distance between the lower ends of the platen 26 and the conveyor assembly 24. In a still further example, relative positions of the platen 26 and/or conveyor assembly 24 may be adjusted during the toasting process, for example, the top of the platen 26 may be moved away from the conveyor assembly facilitate receiving a food product into the toaster. Once the food product is received within the toaster, the top end or both ends of the platen 26 and/or conveyor assembly 24 are moved towards one another to exemplarily achieve a predetermined toaster gap 108 or crushing force on the food product during toasting. In still further examples, the connection or mounting point 112 for the bias spring 44 on the alignment gear 34 may be adjustable by an actuator 114, which is exemplarily, but not limited to a rack and pinion system, so as to modify the overall tension on the belt 30.

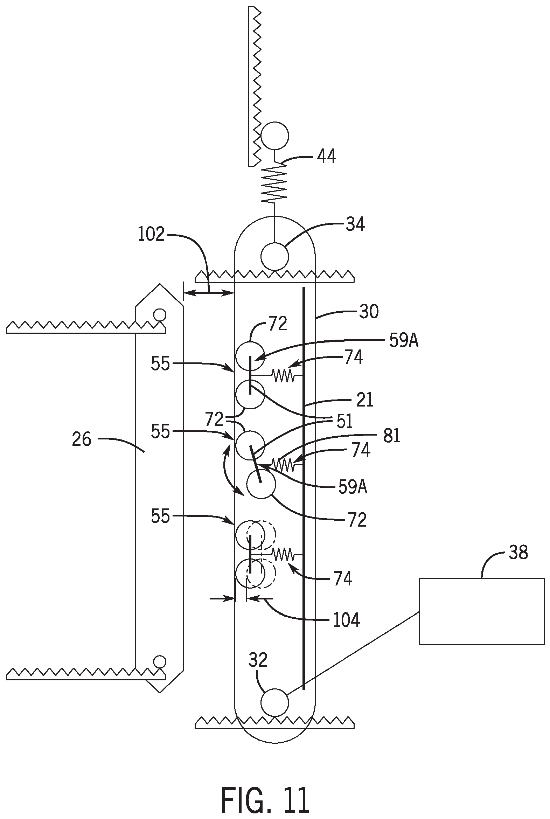

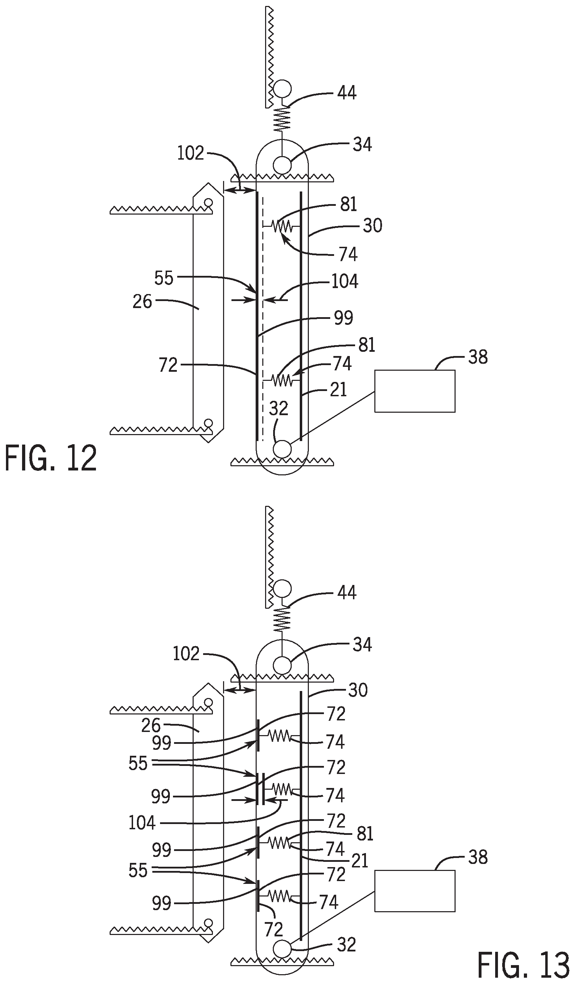

As described above, and in further detail herein, the force elements 55 provide the fine adjustment to the tension on the belt and thus the fine adjustment 104 of the effective distance between the belt 30 and the platen 26. It will be recognized that in examples the force elements may take on various shapes while remaining with the scope of the present disclosure and providing multiple points of adjustable force on the conveyor through a surface 72 and a bias 74. In FIG. 10, seven force elements 55, each of which include a surface 72, exemplarily provided by a cylindrical drum and a bias 74, exemplarily provided by a spring secured between the bracket 21 and the cylindrical drum. At least some of these operate independently to provide localized tensioning on the belt 30 and force on the food product as it passes by each force element. Some examples may include more or fewer of the force elements, including but not limited four (e.g. FIG. 6) or seven (e.g. FIG. 10) depicted herein or three (Fig. 11), one (FIG. 12) or four (FIG. 13) as will be described herein, although these are merely exemplary.

As seen in the center of FIG. 10 and as denoted by arrow 104 and the two positions of the surface 27 exemplarily provided by a cylindrical drum, the bias 74 provides a degree of tolerance or accommodation through the fine adjustment of arrow 104 as a food product passes by on the conveyor belt 30. This accommodation provides resilience for maintaining contact between the food product and the platen 26 while preventing crushing of the food product. As the food product passes each force element 55, the force element 55 responds accordingly to provide local accommodation while maintaining overall tension on the conveyor belt 30.

FIGS. 11-15 are schematic depictions of still further additional examples of the toasting system 100 internal to the toaster 10, including the conveyor assembly 24. As noted above, these examples represent various numbers and/or configurations of the force elements 55 and are intended to be merely exemplary in disclosure. Further examples will be recognized based thereon, which examples are intended to be within the scope of the present disclosure. FIG. 11 depicts an example wherein the surface 72 is provided by cylindrical drums and are mounted in pairs onto a shared mounting bracket 59A for example by way of a pivotable carriage 51 connected between mounting holes configured to receive each cylindrical drum. The bias 74, exemplarily provided by one or more springs 81 is connected between the bracket 21 and the pivotable carriage 51. In this example, when one of the pair of cylindrical drums is compressed by a food product, the remaining cylindrical drum is moved via the shared mounting bracket 59A. This spreads the effective localized area of tension applied by each force element 55 across a wider area.

FIG. 12 depicts an example wherein the surface 72 is provided by a single plate 99 in contact with an internal side of the conveyor belt 30. Biases 74, exemplarily provided by springs 81 are exemplarily connected at the top and bottom of the surface 72. It will be recognized that more than two biases 74 may be provided, exemplarily one at each corner region of the surface 72, and optionally one or more located internally either in the vertical or transverse dimensions within the interior of the surface 72. The biases 74 connect the surface 72 to the bracket 21. The backing plate providing the surface 72 is biased against the interior surface of the conveyor belt 30 and provides fine adjustment to the tension on the conveyor belt. This provides a similar variable resistance/accommodation as described above as a food product passes between the platen 26 and the conveyor belt 30. Because the baises 74 are independently operable, it will be recognized that more compression of the biases 74 may occur locally to the position of the food product, while a portion of the surface 72 away from the food product is urged back toward the fully extended position of the bias 74.

FIG. 13 depicts a further example combining features of the previous examples. The example includes multiple force elements 55. The surfaces 72 of the force elements 55 are provided by individual plates 99. The plates 99 are connected to the bracket 21 by the bias 74, which may exemplarily include a spring 81. It will be recognized that the surfaces 72 may be other shapes, including arcuate or trapezoidal, and not limited to a planar plate. The plurality of surfaces 72 in this example, provide physical contact to the interior surface of the conveyor belt 30 along a substantial portion of the region across from the platen 26, while providing the individualized local deflection for tension and accommodation fine adjustment denoted by arrow 104. This example may provide a benefit of providing surfaces 72 with reduced complexity of a moving roller system.

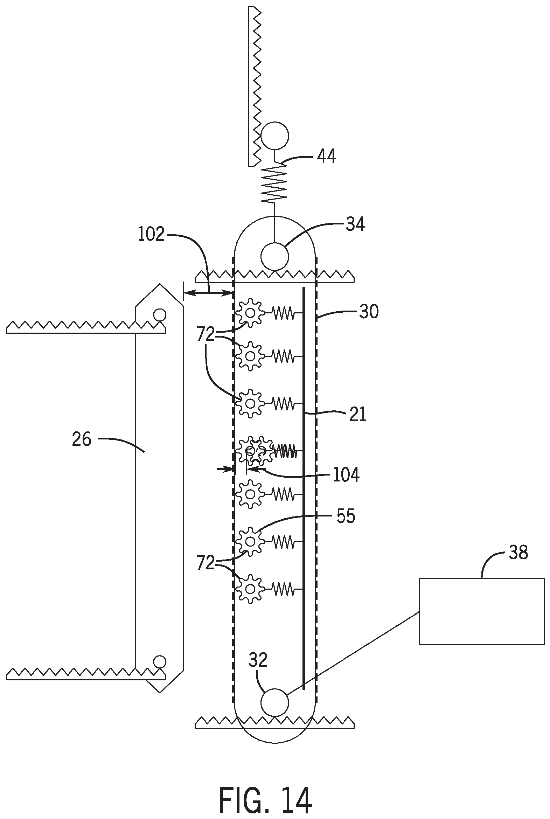

FIG. 14 depicts a further is a schematic depiction of an example of the conveyor assembly 24 specifically in which the conveyor belt 30 is made of a chain-belt. The surface 72 is provided by a gear 115 which is better adapted for engagement between teeth of the gear 115 with the chain of the conveyor belt 30. The gears 115 are connected to the bracket 21 by the bias 74, which may exemplarily include a spring 81.

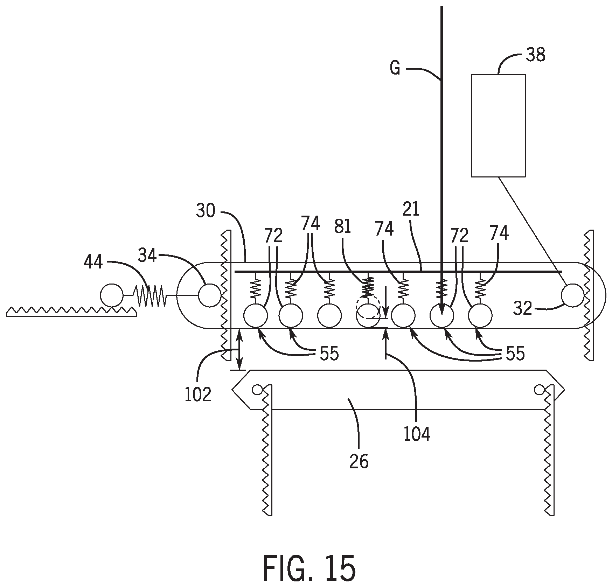

FIG. 15 depicts another example demonstrating that the conveyor assembly 24, of any of the previous examples may also be implemented in a horizontal orientation. The force elements 55 including the surfaces 72 and biases 74 enact a compression force from the bracket 21 onto food products in combination with gravity G. It will be recognized that in such an example, the additional force of gravity G may result in less needed supplemental tension provided for the fine adjustment 104.

In the above description, certain terms have been used for brevity, clarity, and understanding. No unnecessary limitations are to be inferred therefrom beyond the requirement of the prior art because such terms are used for descriptive purposes and are intended to be broadly construed. The different systems and method steps described herein may be used alone or in combination with other systems and methods. It is to be expected that various equivalents, alternatives and modifications are possible within the scope of the appended claims.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A conveyor assembly for a toaster, comprising:
an alignment gear;
a drive gear;
a conveyor belt extending between the alignment gear and the drive gear in an endless loop;
a bracket configured to support the alignment gear and the drive gear; and
at least one force element connected to the bracket and positioned internal to the conveyor belt and between the alignment gear and the drive gear, the at least one force element comprising a surface and a bias, the surface configured to engage the conveyor belt and the bias connected between the surface and the bracket to place a resilient force on the conveyor belt through the surface in a direction away from the bracket.

2. The conveyor assembly of claim 1, wherein the at least one force element comprises a mounting bracket at each end of the at least one force element, the mounting bracket at each end of the at least one force element independently connected to the bracket.

3. The conveyor assembly of claim 2, further comprising a spring between the mounting bracket and the bracket.

4. The conveyor assembly of any of claims 1-3, wherein the bracket comprises a plurality of inwardly extending flanges, and each force element is secured to the bracket at opposed flanges of the plurality of flanges.

5. The conveyor assembly of claim 4, wherein the surface of the force element is connected to a mounting bracket and the bias comprises a spring that extends between the mounting bracket and a flange of the plurality of flanges of the bracket.

6. The conveyor assembly of any of claims 1-5, wherein the bracket comprises a pair of spaced apart sidewalls, wherein the drive gear and the alignment gear are rotatably connected between the sidewalls, the sidewalls each comprising opposed flanges extending interior of the sidewalls of the bracket, wherein the at least one force element is connected to the bracket at the opposed flanges.

7. The conveyor assembly of claim 6, wherein the bracket further comprises a plurality of slats that extend between the sidewalls to connect the sidewalls, the plurality of slats spaced apart from the opposed flanges along a vertical dimension, and optionally wherein each sidewall of the bracket defines a spring mount and a tensioning spring depends from the spring mount to operative connection with the alignment gear, whereby the tensioning spring places tension on the conveyor belt through the alignment gear.

8. The conveyor assembly of any of claims 1-7, wherein the at least one force element is a plurality of force elements, each force element of the plurality comprising a surface and a bias.

9. The conveyor assembly of claim 8, wherein each force element is independently movable between the conveyor belt and the bracket.

10. The conveyor assembly of claim 9, wherein each force element comprises a bias at either end of the force element, and each bias operates independently on a respective end of the force element.

11. The conveyor assembly of any of claims 8-10, wherein the surface of each of the plurality of force elements is provided by a roller.

12. The conveyor assembly of any of claims 8-10, wherein the surface of each of the plurality of force elements is provided by a plate.

13. A conveyor toaster comprising:
a conveyor assembly according to claims 1-12; and
a platen arranged lengthwise along a run span of the belt between the alignment gear and the drive gear, and defining a toaster gap between the platen and the conveyor belt.

14. The conveyor toaster of claim 13, wherein at least one of:
the platen is movable relative to the conveyor assembly,
the conveyor assembly is movable relative to the platen, and
the bracket is movable relative to the platen, and optionally wherein the bracket comprises at least one bracket mount secured to a carriage that is mechanically movable to adjust a position of the bracket relative to the platen.

15. The conveyor toaster of claim 13 or 14, further comprising at least one actuator connected to the platen and/or to the conveyor assembly, wherein the at least one actuator is configured to adjust a relative position between the platen and the conveyor assembly.
